Europäisches Patentamt

European Patent Office

Office européen des brevets

(11) Veröffentlichungsnummer : **0 096 848**
**B1**

(12) **EUROPÄISCHE PATENTSCHRIFT**

(45) Veröffentlichungstag der Patentschrift :
05.03.86

(51) Int. Cl.⁴ : **C 09 D  5/16**

(21) Anmeldenummer : 83105652.8

(22) Anmeldetag : 09.06.83

(54) **Verfahren zum Herstellen eines algenbewuchsabweisenden Unterwasseranstrichs.**

(30) Priorität : 11.06.82 DE 3222089
17.08.82 DE 3230536

(43) Veröffentlichungstag der Anmeldung :
**28.12.83 Patentblatt 83/52**

(45) Bekanntmachung des Hinweises auf die Patenterteilung : **05.03.86 Patentblatt 86/10**

(84) Benannte Vertragsstaaten :
**AT BE CH FR GB IT LI LU NL SE**

(56) Entgegenhaltungen :
**US-A- 1 737 132**

(73) Patentinhaber : **Nissenbaum, Benjamin**
**St.-Leonhardsweg 12**
**D-7750 Konstanz (DE)**

(72) Erfinder : **Gansloser, Helmut, Dr.-Ing.**

**verstorben (DE)**
Erfinder : **Nissenbaum, Benjamin**
**St.-Leonhardsweg 12**
**D-7750 Konstanz 19 (DE)**

(74) Vertreter : **Hiebsch, Gerhard F., Dipl.-Ing.**
**Erzbergerstrasse 5A Postfach 464**
**D-7700 Singen 1 (DE)**

## Beschreibung

Zur Konservierung von dem Wasser ausgesetzten Teilen wie Bootskörpern od. dgl. sind algenbewuchsabwehrende Unterwasseranstriche als sog. Anti-fouling-Farben bekannt, die zur Verhinderung des Ansetzens von Algenbewuchs giftige, meist anorganische Verbindungen bzw. Farbpigmente wie Blei- und Quecksilberverbindungen aufweisen. Diese Pigmente verschmutzen nach Abrieb das Wasser von Seen und Flüssen.

Angesichts dieser Gegebenheiten hat sich der Erfinder das Ziel gesetzt, ungiftige algenbewuchsabweisende Unterwasserfarben zu entwickeln, welche jedoch — den bekannten giftigen Anstrichmitteln gleichwertige — algenbewuchsabweisende Eigenschaften aufweisen.

Zur Lösung dieser Aufgabe führt, daß einer Unterwasserlackfarbe ein Zink enthaltender Zusatz aus $(CN)_6$-komplexen Salzen der Cyanwasserstoffsäure, insbesondere der Hexacyanoeisen-(II)-säure oder der Hexacyanoeisen-(III)-säure, zugegeben wird. Dabei soll vorteilhafterweise als alleiniges oder zusätzliches Farbpigment einer farblosen Unterwasserlackfarbe Zinkferrocyanid — und/oder Zinkferricyanid — insbesondere mit Blutlaugensalzer oder Gelbnatron oder Gelbcalcium versetzt, zugegeben werden. Zinkferrocyanid und Zinkferricyanid sind in Wasser und verdünnten Säuren unlösliche Pigmente, welche erhalten werden, wenn man Zinksalze (Zinkchlorid oder Zinksulfat) mit gelben oder rotem Blutlaugensalz (K), Gelbnatron (Na) oder Gelbcalcium (Ca) versetzt. Es entstehen dann die Zinkferro- bzw. Zinkferricyanide,

$$Zn_2 [Fe (CN)_6]$$

oder

$$Zn_3 [Fe (CN)_6]_2,$$

die bevorzugt in einer Menge von 1 bis 60 Gew.-% zugegeben werden.

Beispiel 1

1 kg klarer Unterwasserlack wird auf einem Walzenstuhl mit 120 g Zinkferrocyanid vermischt. Nach Vermahlen der Komponenten entsteht ein Unterwasseranstrich, welcher mit Lösungsmitteln versetzt, streichfähig ist.

Beispiel 2

1 kg klarer Unterwasserlack wird auf dem Walzenstuhl mit 80 g Zinkferricyanid vermischt. Nach Vermahlen der Komponenten entsteht eine Streichmasse, die — mit Lösungsmittel verdünnt — als algenabweisender Unterwasseranstrich geeignet ist.

Im Rahmen der Erfindung liegt die Möglichkeit, den ungiftigen anti-fouling-Effekt der beiden Farbpigmente Zinkferrocyanid und Zinkferricyanid zu kombinieren mit dem Aufziehen dieser Farben in/auf (OH) enthaltende Stoffe mit sorptiven Eigenschaften und/oder sorbierende anorganische Stoffe, insbesondere Aluminium enthaltende Stoffe, vorzugsweise Tonmineralien oder Gemische davon wie Kaolin oder Bentonit.

Dies hat den Vorteil, daß diese Endmaterialien erheblich billiger herstellbar sind als die reinen Pigmente, während der algenabweisende Effekt erhalten bleibt.

Dazu wird Ton, Kaolin oder Bentonit in Wasser aufgeschwemmt und dieser wässrigen Suspension ein Zinksalz (Zinksulfat oder Zinkchlorid) zugegeben. Diese Suspension wird mehrmals aufgerührt und einige Stunden stehengelassen. Dadurch wird erreicht, daß im Austausch gegen Na- und Ca-Ionen Zinkionen an das Tonmineral gebunden werden.

Anschließend wird dieser Suspension eine ausreichende Menge von Kaliumferrocyanid- bzw. Kaliumferricyanid-Lösung zugegeben, wodurch eine Fixierung der unlöslichen Verbindungen Zinkferrocyanid bzw. Zinkferricyanid auf den Tonmineralien erhalten wird. Nach Auswaschen und Trocknen dieser Tonmineralien sowie Entwässern werden Verbindungen erhalten, welche geeignet sind und welche ebenfalls anti-fouling-Eigenschaften wie reines Zinkferrocyanid bzw. Zinkferricyanid aufweisen.

Das Verfahren zum Herstellen des algenbewuchsabweisenden Unterwasseranstrichs zeichnet sich dadurch aus, daß die zu verwendenden algenbewuchsabweisenden Pigmente Zinkferrocyanid bzw. Zinkferricyanid durch Fällung dieser Salze erst nach Bindung des Zink-Kations an ein Tonmineral erfolgt und dieses so erhaltene Ton/Tonmineralzinkferrocyanid bzw. Ton/Tonmineralzinkferricyanid als Farbpigment in der Unterwasseranstrichfarbe Verwendung findet.

Beispiel 3

1 kg Kaolin wird in Wasser aufgeschwämmt und dieser wässrigen Suspension des Kaolins eine 20 %ige Zinkchlorid-Lösung zugegeben bis keine Zinkionen durch Ionenaustausch mehr aufgenommen werden. Diese Kaolin-Zink-Suspension wird mit einer ebenfalls 20 %igen Kaliumferrocyanid-Lösung versetzt, wodurch sich das unlösliche Zinkferrocyanid mit dem Kaolin fest verbindet. Nach Auswaschen und Trocknen des Materials unterhalb der Sintergrenze des Kaolins wird ein Pigment erhalten, welches algenbewuchsabweisende Eigenschaften enthält und auf dem Walzenstuhl mit einem farblosen oder auch bereits pigmentierten Unterwasseranstrich kombiniert wird.

Beispiel 4

1 kg Ton oder Bentonit wird nach Aufschwämmung in Wasser mit einer 20 %igen Zinksulfatlösung versetzt, wodurch Na- und Ca-Ionen gegen Zink-Ionen ausgetauscht werden. Diese Ton- bzw. Bentonitsuspension, welche nunmehr mit Zink-Ionen gesättigt ist, wird sodann mit einer 20%igen Kaliumferricyanidlösung versetzt, wodurch sich das unlösliche Zinkferricyanid auf dem Ton bzw. dem Bentonit bildet und auf diesem fixiert wird. Nach Auswaschen und Trocknen des Materials unterhalb der Sintergrenze des Tons wird ein Pigment erhalten, welches algenbewuchsabweisende Eigenschaften aufweist und auf dem Walzenstuhl mit Unterwasseranstrichbindemitteln kombiniert wird.

Im Rahmen der Erfindung liegen alle Anstrichmassen, die mittels des beschriebenen Verfahrens gewonnen werden.

Als Trägersubstanz für die Zusätze kann auch Silikagel verwendet werden.

Mikronisiertes Silikagel, für Lackpigmentzwecke bevorzugt mit der Korngröße zwischen 2-10 μ Durchmesser, hat eine enorm große innere Oberfläche. Diese innere Oberfläche kann mit unlöslichen anorganischen Salzen, aber auch mit organischen Farbstoffen gefüllt werden. Durch dieses Einbringen von chemischen Stoffen in die Kapillaren der Silikateilchen erfährt das Silikateilchen eine erhöhte innere Spannung, bedingt durch die Kapillaraktivität, welche bei der Filmbildung eines Anstriches für eine Straffung und Glättung der Filmhaut führt. Für Unterwasseranstriche ist dies wichtig wegen des verminderten Strömungswiderstandes des Wassers an der Schiffshaut.

Dieser Effekt kann nicht nur mit denselben Zusätzen erzielt werden, wie sie für das Antifouling verwendet werden, sondern auch mit anderen anorganischen oder organischen Substanzen.

**Patentansprüche**

1. Verfahren zum Herstellen eines algenbewuchsabweisenden Unterwasseranstrichs, dadurch gekennzeichnet, daß einer Unterwasserlackfarbe ein Zink enthaltender Zusatz aus (CN)$_6$-komplexen Salzen der Cyanwasserstoffsäure, insbesondere der Hexacyanoeisen-(II)-säure oder der Hexacyanoeisen-(III)-säure, zugegeben wird.

2. Verfahren nach Anspruch 1, dadurch gekennzeichnet, daß als alleiniges oder zusätzliches Farbpigment einer farblosen Unterwasserlackfarbe Zink-Ferrocyanid und/oder Zink-Ferricyanid, insbesondere mit Blutlaugensalzen oder Gelbnatron oder Gelbcalcium versetzt, zugegeben werden/wird.

3. Verfahren nach Anspruch 1 oder 2, dadurch gekennzeichnet, daß dem Bindemittel des Unterwasseranstrichs

$$Zn_2 [Fe (CN)_6]$$

oder

$$Zn_3 [Fe (CN)_6]_2$$

in einer Menge von 1 bis 60 Gew.-% zugegeben wird.

4. Verfahren nach einem der Ansprüche 1 bis 3, dadurch gekennzeichnet, daß der Zusatz aus Zinksalzen der Cyanwasserstoffsäure in/auf anorganische Stoffe gebracht wird.

5. Verfahren nach einem der Ansprüche 1 bis 4, dadurch gekennzeichnet, daß Silikagel als Trägersubstanz für die Zusätze so behandelt wird, daß die Poren des Silikagels mit diesen Zusätzen durchsetzt sind.

6. Verfahren nach Anspruch 5, dadurch gekennzeichnet, daß Silikagel mit einer Korngröße zwischen 2 und 10 μ verwendet wird.

7. Verfahren nach einem der Ansprüche 1 bis 4, dadurch gekennzeichnet, daß der Zusatz aus Zinksalzen der Cyanwasserstoffsäure in/auf Tonerde resp. Zeolithe gebracht wird.

8. Verfahren nach einem der Ansprüche 1 bis 4, dadurch gekennzeichnet, daß die Stoffe sorbierende, vorzugsweise Aluminium enthaltende Stoffe, sind.

9. Verfahren nach Anspruch 8, dadurch gekennzeichnet, daß der Stoff aus einzelnen Tonmineralien oder einem Gemenge davon besteht.

10. Verfahren nach Anspruch 9, dadurch gekennzeichnet, daß als Stoff Kaolin oder Bentonit verwendet wird.

11. Verfahren nach einem der Ansprüche 1 bis 10, dadurch gekennzeichnet, daß der Zusatz aus Zinksalzen der Cyanwasserstoffsäure durch Umsetzung einer Zinkionen enthaltenden wässrigen Suspension des anorganischen Stoffs mit einer Ferricyanid- und/oder Ferrocyanidlösung und nachfolgendem Auswaschen und Trocknen erhalten wird.

12. Verfahren nach Anspruch 11, dadurch gekennzeichnet, daß Kaliumferricyanid und/oder Kaliumferrocyanid verwendet wird.

**Claims**

1. A method of producing an algae growth-repellent underwater coating, characterised in that there is added to an underwater paint a zinc-bearing additive comprising (CN)$_6$-complex salts of hydrocyanic acid, in particular hexacyano iron (II) acid or hexacyano iron (III) acid.

2. A method according to claim 1 characterised in that zinc ferrocyanide and/or zinc ferricyanide is added as sole or additional pigment to a colourless underwater paint, in particular in mixture with potassium ferrocyanide or ferricyanide or yellow soda or yellow calcium.

3. A method according to claim 1 or claim 2 characterised in that

$$Zn_2 [Fe (CN)_6]$$

or

$$Zn_3 [Fe (CN)_6]_2$$

is added to the binding agent of the underwater coating, in an amount of from 1 to 60 % by weight.

4. A method according to one of claims 1 to 3 characterised in that the additive comprising zinc salts of hydrocyanic acid is added into/onto inorganic substances.

5. A method according to one of claims 1 to 4 characterised in that silica gel as a carrier substance for the additives is treated in such a way that the pores of the silica gel are permeated with said additives.

6. A method according to claim 5 characterised by using silica gel with a grain size of between 2 and 10 $\mu$.

7. A method according to one of claims 1 to 4 characterised in that the additive comprising zinc salts of hydrocyanic acid is added into/onto alumina or argillaceous earth or zeolite respectively.

8. A method according to one of claims 1 to 4 characterised in that the substances are sorbing, preferably aluminium-bearing substances.

9. A method according to claim 8 characterised in that the substance comprises individual clay minerals or a mixture thereof.

10. A method according to claim 9 characterised in that kaolin or bentonite is used as the substance.

11. A method according to one of claims 1 to 10 characterised in that the additive comprising zinc salts of hydrocyanic acid is produced by the reaction of a zinc ion-containing aqueous suspension of the inorganic substance with a ferricyanide and/or ferrocyanide solution, and subsequent washing and drying.

12. A method according to claim 11 characterised by using potassium ferricyanide and/or potassium ferrocyanide.

**Revendications**

1. Procédé de préparation d'une peinture sous-marine anti-salissure caractérisé en ce que on ajoute à une peinture laquée sous-marine un ajoutage contenant zinc et étant composé de sels $(CN)_6$ — complexes de l'acide cyanhydrique, notamment de l'acide hexacyanoferrate (II) ou l'acide hexacyanoferrate (III).

2. Procédé selon la revendication 1, caractérisé en ce que on ajoute à une peinture laquée sous-marine comme pigment coloré unique ou supplémentaire zinc-ferrocyanure et/ou zinc-ferricyanure mélangé(s) notamment avec ferrocyanure de potassium ou bicarbonate de sodium jaune ou calcium jaune.

3. Procédé selon la revendication 1 ou 2 caractérisé en ce qu'on ajoute au liant de la peinture sous-marine

$$Zn_2 \, [Fe \, (CN)_6]$$
ou
$$Zn_3 \, [Fe \, (CN)_6]_2$$

à une dose de 1 à 60 % en poids.

4. Procédé selon une des revendications 1 à 3 caractérisé en ce que l'ajoutage composé de sels zinciques de l'acide cyanhydrique est mis dans/sur des substances inorganiques.

5. Procédé selon une des revendications 1 à 4 caractérisé en ce que du gel de silice sert comme porte-catalyseur pour les ajoutages et vient traité d'une manière que les pores du gel de silice sont chargés de ces ajoutages.

6. Procédé selon la revendication 5 caractérisé en ce que on utilise un gel de silice d'un calibre entre 2 et 10 $\mu$.

7. Procédé selon une des revendications 1 à 4 caractérisé en ce que l'ajoutage composé de sels zinciques de l'acide cyanhydrique est mis dans/sur alumine ou plutôt zéolites.

8. Procédé selon une des revendications 1 à 4 caractérisé en ce qu'il s'agit de substances absorbantes, de préférence de substances contenant aluminium.

9. Procédé selon la revendication 8, caractérisé en ce que la substance est composée de minéraux d'argile séparés ou d'un mélange de ceux-ci.

10. Procédé selon la revendication 9 caractérisé en ce qu'on utilise comme substance kaolin ou bentonite.

11. Procédé selon une des revendications 1 à 10, caractérisé en ce que l'ajoutage composé de sels zinciques de l'acide cyanhydrique est obtenu par la transformation d'une suspension aqueuse de la substance inorganique contenant ions de zinc avec une solution de ferricyanure et/ou de ferrocyanure et par un lavage et un séchage subséquents.

12. Procédé selon la revendication 11 caractérisé en ce que on utilise ferricyanure de potassium et/ou ferrocyanure de potassium.